# EUROPEAN PATENT APPLICATION

(11) **EP 4 502 985 A1**
(43) Date of publication of application: **05.02.2025**
(21) Application number: 24190986.0
(22) Date of filing: 25.07.2024
(51) Int. Cl.: G08G 5/00, B64D 45/08, G06T 7/73, G06V 20/17, G08G 5/02

(54) **RUNTIME ASSURANCE SYSTEM FOR MANUAL AND AUTOMATED LANDINGS**

(30) Priority: 02.08.2023 US 202318229347
(71) Applicant: Rockwell Collins, Inc., Cedar Rapids, IA 52498 (US)
(72) Inventor: ANDERSON, Eric N., Marion, 52302 (US); JOHNSON, Wade T., Cedar Rapids, IA, 5203 (US); LAHR, Weston J., Sherwood, OR, 97140 (US); RADEMAKER, Richard M., Cedar Rapids, IA, 53580 (US)
(74) Representative: Dehns

(57) **Abstract**

A system may include at least one processor (404) configured to: obtain data of an aircraft (302), the data including and/or associated a flight path vector (FPV) and/or a flight path predictor (FPP); obtain image sensor data output; identify features associated with a runway (103); determine that the identified features are indicative of the runway; determine a touch down zone on the runway; determine whether the FPV and/or the FPP is in the touch down zone when the aircraft is at a decision altitude and/or is predicted to be in the touch down zone when the aircraft will be at the decision altitude; and (i) output a notification to proceed with a landing procedure, (ii) perform an operation configured to cause the aircraft to proceed with the landing procedure, (iii) output a notification to perform a go-around procedure, and/or (iv) perform an operation configured to cause the aircraft to perform the go-around procedure.

## Description

### BACKGROUND

Currently, autonomous flight operations require a high integrity solution for automated landings without depending on Category III Instrument Landing Systems (ILS), such as Category IIIB ILSs. CAT IIIB is a commonly used term to describe a precision approach requiring a fail-operational flight control system. Currently, global navigation satellite systems (GNSSs) (e.g., global positioning systems (GPSs)) and GNSS augmentation methods offer only a partial solution for civil aviation due to inherent design limitations and vulnerabilities to purposeful interference (e.g., spoofing and/or jamming). Such problems are currently exacerbated for fully automated vehicles, which do not have an onboard pilot to monitor the approach and make a go/no-go decision and/or go-around decision while performing an approach and/or landing.

### SUMMARY

In one aspect, embodiments of the inventive concepts disclosed herein are directed to a system. The system may include at least one processor. The at least one processor may be configured to: obtain data of an aircraft, the aircraft performing an approach procedure, the data including and/or associated with flight path information, the flight path information including at least one of a flight path vector (FPV) or a flight path predictor (FPP); obtain image sensor data output by at least one image sensor of the aircraft, the image sensor data including data associated with at least one image of a view from the aircraft, the view at least partially in front of the aircraft; identify features associated with a runway, the features within one or more of the at least one image; determine that the identified features are indicative of the runway; determine a touch down zone on the runway, wherein the touch down zone is defined by toleranced boundary locations representing an acceptable touch down dispersion for the aircraft; compare the FPV and/or the FPP with the touch down zone to determine whether the FPV and/or the FPP is in the touch down zone when the aircraft is at a decision altitude and/or is predicted to be in the touch down zone when the aircraft will be at the decision altitude; and at least one of: (a) at least one of: (i) upon a determination that the FPV and/or the FPP is in and/or is predicted to be in the touch down zone at the decision altitude, output a notification for presentation to a user to proceed with a landing procedure, or (ii) upon the determination that the FPV and/or the FPP is in and/or is predicted to be in the touch down zone at the decision altitude, perform an operation configured to cause the aircraft to proceed with the landing procedure; or (b) at least one of: (i) upon a determination that the FPV and/or the FPP is not in and/or is not predicted to be in the touch down zone at the decision altitude, output a notification for presentation to the user to perform a go-around procedure, or (ii) upon the determination that the FPV and/or the FPP is not in and/or is not predicted to be in the touch down zone at the decision altitude, perform an operation configured to cause the aircraft to perform the go-around procedure.

In a further aspect, embodiments of the inventive concepts disclosed herein are directed to a method. The method may include: obtaining, by at least one processor, the aircraft performing an approach procedure, the data including and/or associated with flight path information, the flight path information including at least one of a flight path vector (FPV) or a flight path predictor (FPP); obtaining, by the at least one processor, image sensor data output by at least one image sensor of the aircraft, the image sensor data including data associated with at least one image of a view from the aircraft, the view at least partially in front of the aircraft; identifying, by the at least one processor, features associated with a runway, the features within one or more of the at least one image; determining, by the at least one processor, that the identified features are indicative of the runway; determining, by the at least one processor, a touch down zone on the runway, wherein the touch down zone is defined by toleranced boundary locations representing an acceptable touch down dispersion for the aircraft; comparing, by the at least one processor, the FPV and/or the FPP with the touch down zone to determine whether the FPV and/or the FPP is in the touch down zone when the aircraft is at a decision altitude and/or is predicted to be in the touch down zone when the aircraft will be at the decision altitude; and by the at least one processor, at least one of: (a) at least one of: (i) upon a determination that the FPV and/or the FPP is in and/or is predicted to be in the touch down zone at the decision altitude, outputting a notification for presentation to a user to proceed with a landing procedure, or (ii) upon the determination that the FPV and/or the FPP is in and/or is predicted to be in the touch down zone at the decision altitude, performing an operation configured to cause the aircraft to proceed with the landing procedure; or (b) at least one of: (i) upon a determination that the FPV and/or the FPP is not in and/or is not predicted to be in the touch down zone at the decision altitude, outputting a notification for presentation to the user to perform a go-around procedure, or (ii) upon the determination that the FPV and/or the FPP is not in and/or is not predicted to be in the touch down zone at the decision altitude, performing an operation configured to cause the aircraft to perform the go-around procedure.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIGS. 1A and 1B show exemplary embodiments of exemplary images of a view from an aircraft according to the inventive concepts disclosed herein.
FIGS. 2A, 2B, 2C, and 2D show exemplary embodiments of exemplary display images associated with the images of FIGS. 2A and 2B o according to the inventive concepts disclosed herein.
FIG. 3 is a view of an exemplary embodiment of a system according to the inventive concepts disclosed herein.
FIG. 4 is a view of an exemplary embodiment of a display unit computing device of the system of FIG. 3 according to the inventive concepts disclosed herein.
FIG. 5 is a view of an exemplary embodiment of a computing device of the system of FIG. 3 according to the inventive concepts disclosed herein.
FIG. 6 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a system (e.g., an aircraft system or a system including an aircraft and an offboard device) and a method configured to compare an aircraft's flight path vector (FPV) and/or flight path predictor (FPP) with a touch down zone to determine whether the FPV and/or the FPP is in the touch down zone when the aircraft is at a decision altitude and/or is predicted to be in the touch down zone when the aircraft will be at the decision altitude, make a go/no go decision and/or recommendation, and/or at least one of output a notification to user or perform and aircraft operation based on the go/no go decision and/or recommendation.

An FPV may be approximately instantaneous (e.g., instantaneous, or the FPV may be filtered or smoothed in some cases) projection of the current aircraft trajectory. The FPV can be readily depicted as angular offsets from an aircraft pitch angle and a lateral pointing angle (also known as a heading). As the FPV may be an instantaneous depiction of a difference between the trajectory and the pointing angle, the FPV may not project future states accurately when the aircraft is maneuvering (e.g., turning or changing roll or pitch angles).

The FPV is where an aircraft is headed, which might not be where the aircraft is pointed. For example, such data of where the aircraft is headed could come from an inertial system, such as an inertial reference system (IRS), an attitude and heading reference system (AHARS), and/or other sensors and/or systems, such as microelectromechanical systems (MEMSs), of the aircraft capable of measuring and reporting aircraft accelerations, velocities, and/or orientation.

An FPP may add compensation terms to the FPV, for example, wherein such compensation terms may be and/or may be based on bank angle, turn rate, pitch rate, lateral and/or vertical accelerations and/or the like, to indicate a projected future state. For example, the projected future state may be around 30 seconds into the future past the current trajectory associated with the flight path vector.

Some embodiments may include monitoring a time history behavior of the FPV and/or the FPP to determine if the approach is progressing in a stable fashion. For example, large, rapid and/or erratic movements of the FPV and/or the FPP may be an indicator of an unstable approach even if the movements of the FPV and/or the FPP do not extend beyond an identified touchdown zone. The sensitivity of the system to these behaviors can be adjusted based on several conditions, such as how close a nominal or average position of the FPV and/or the FPP is to a center of the touchdown zone, proximity of the aircraft to the touchdown zone (e.g., determined directly or indirectly through parameters, such as image size or radar altimeter information), and/or a general trend of excursions from a nominal position of the FPV and/or the FPP (e.g., the system could be more sensitive to excursions trending to land short more often than land long.)

In some embodiments, the system (e.g., at least one processor of the system) may be configured to: (a) at least one of: (i) upon a determination that the FPV and/or the FPP is in and/or is predicted to be in the touch down zone at the decision altitude, output a notification for presentation to a user to proceed with a landing procedure, or (ii) upon the determination that the FPV and/or the FPP is in and/or is predicted to be in the touch down zone at the decision altitude, perform an operation configured to cause the aircraft to proceed with the landing procedure; or (b) at least one of: (i) upon a determination that the FPV and/or the FPP is not in and/or is not predicted to be in the touch down zone at the decision altitude, output a notification for presentation to the user to perform a go-around procedure, or (ii) upon the determination that the FPV and/or the FPP is not in and/or is not predicted to be in the touch down zone at the decision altitude, perform an operation configured to cause the aircraft to perform the go-around procedure.

Some embodiments may provide at least one onboard and/or offboard processor configured to execute a run-time assurance monitor for approaches to any runway, whereby the at least one onboard and/or offboard processor may make a go/no-go decision for landings independent of instrument landing system (ILS) landing guidance and/or independent of GNSS landing guidance.

Some embodiments may include at least one forward-looking image sensor (e.g., at least one electromagnetic (EM) image sensor; e.g., a radar system and/or a camera) installed on an aircraft, wherein the at least one image sensor may be configured to sense electromagnetic energy (e.g., light and/or radio waves) and output corresponding image data associated with images. Some embodiments may include the use of at least one processor to perform computer vision techniques to recognize runway features (e.g., a runway threshold of a runway, left and/or right edges of the runway, a centerline of the runway, runway approach and landing lights, and/or airport lights for a runway of the airport) within the images so as to identify a runway, determine a touch down zone of the runway, and overlay the touch down zone on the images. In some embodiments, identification of the runway may include accessing and referencing information contained within a runway database to obtain information associated the runway, such as to manage misplaced runway thresholds. In some embodiments, the touch down zone may be defined by toleranced boundary locations representing an acceptable touch down dispersion (which may vary based on specific information associated with a given aircraft, given environmental conditions, and/or given runway conditions) for the aircraft.

Some embodiments may include at least one processor configured to use data (e.g., including and/or associated with flight path information) to project an FPV and/or an FPP into a visual scene.

Some embodiments may include at least one processor configured to use vertical and lateral offset errors of the FPP and/or the FPV relative to the touch down zone location as a run-time assurance monitor. For example, if the aircraft is on an approach path (e.g., as determined based at least on data obtained from the ILS and/or GNSS device and/or data associated with a flight management system (FMS) and/or an auto-landing system) and if a center of the FPV and/or the FPP is located within the touch down zone in an image, the landing procedure can continue (e.g., so long as no other run time assurance condition triggers a go-around decision or recommendation). For example, if the touch down zone is not visually determined, the aircraft can continue the approach until a radar altimeter and/or barometer (as may be appropriate to an approach) indicates reaching a decision altitude. For example, a go-around may be triggered whenever the run-time assurance monitor conditions are not satisfied.

Some embodiments do not need to (beyond possibly identifying when thresholds are displaced) rely on a navigation system's (e.g., GPS and/or ILS) position information such that such embodiments can provide a go/no-go decision independent of such navigation systems and such that such embodiments can provide sufficient runtime assurance to enable fully automated landings on runways without needing Category III landing systems (e.g., Category IIIB ILSs).

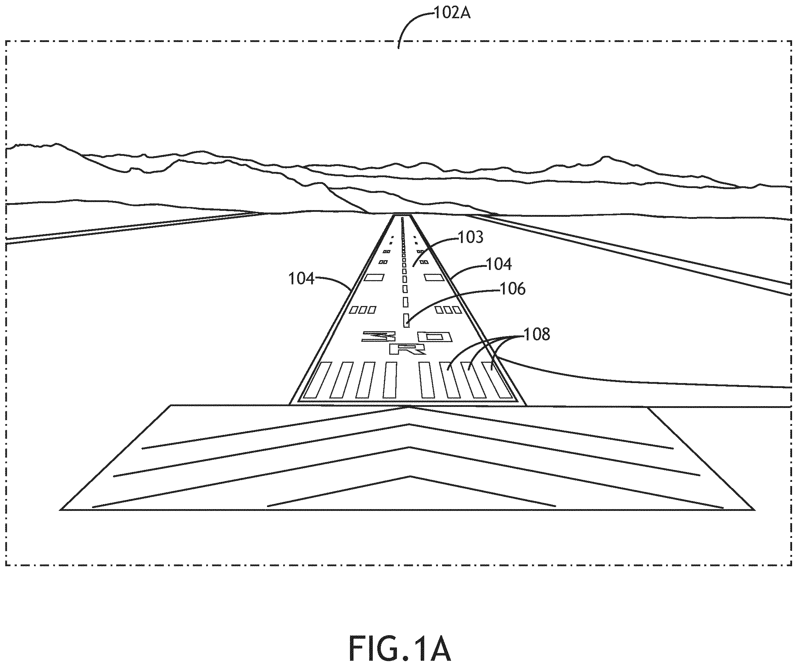

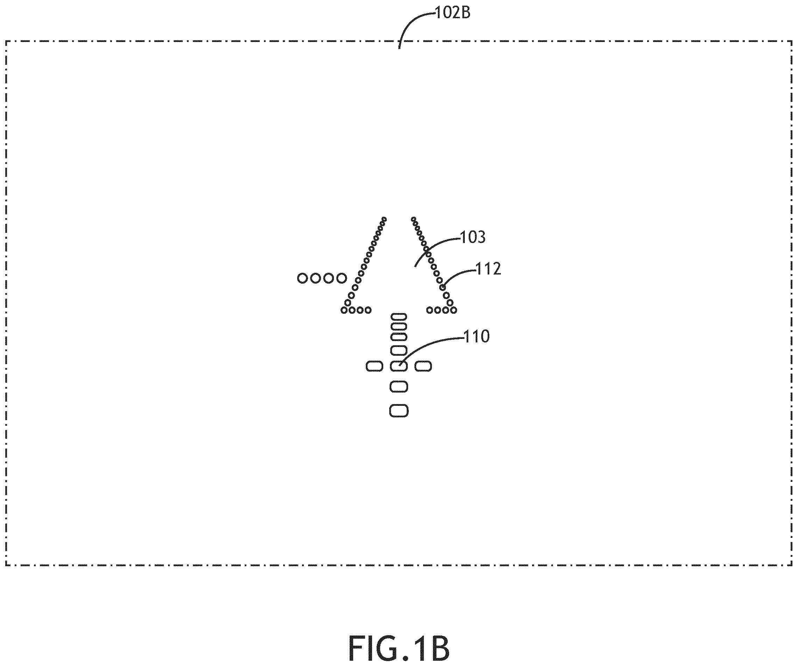

Referring now to FIGS. 1A and 1B, exemplary embodiments of exemplary images 102A, 102B of a view from an aircraft are shown. The images 102A, 102B may include a runway 103 and/or features (e.g., at least one runway edge 104, at least one runway threshold 108, at least one runway centerline 106, or at least one runway and approach light (e.g., at least one approach light 110 and/or at least one runway light 112)) associated with the runway 103. In some embodiments, at least one processor may be configured to obtain image sensor data output by at least one image sensor of an aircraft, the image sensor data including data associated with at least one image of a view from the aircraft, the view at least partially in front of the aircraft. FIG. 1A shows the image 102A captured in day-time. FIG. 1B shows the image 102B captured at night.

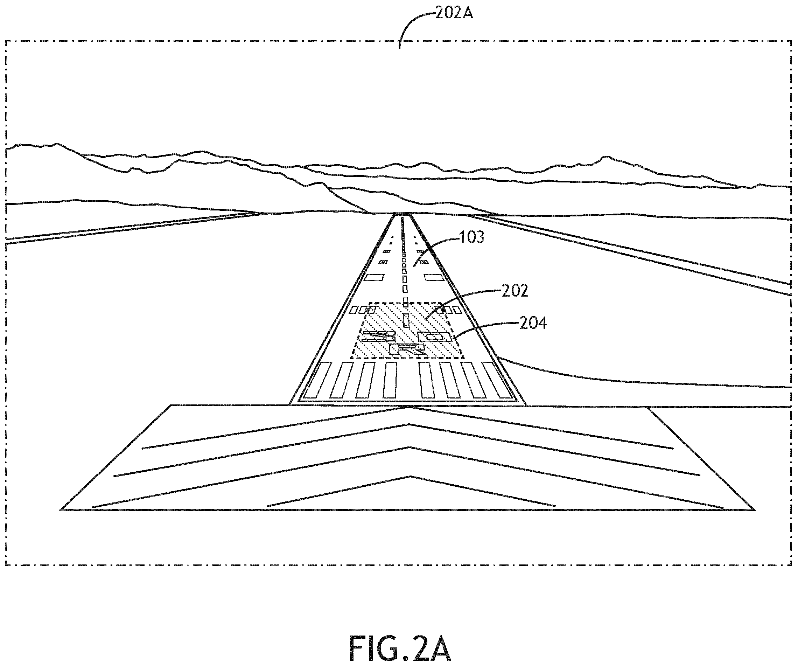

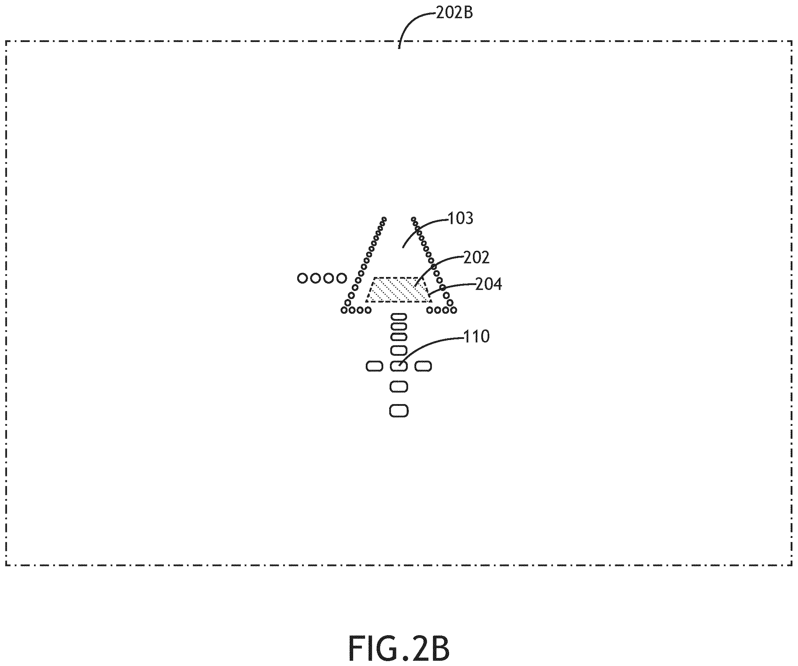

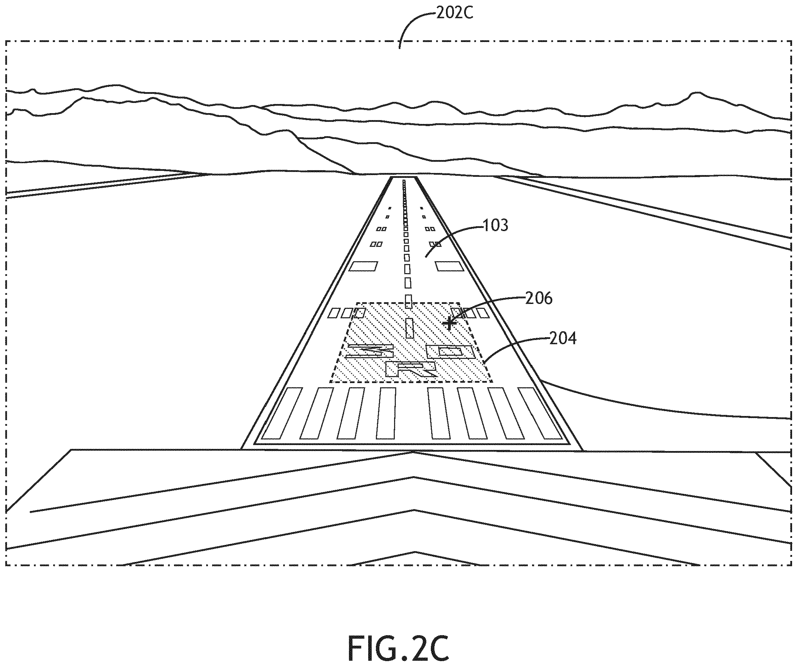

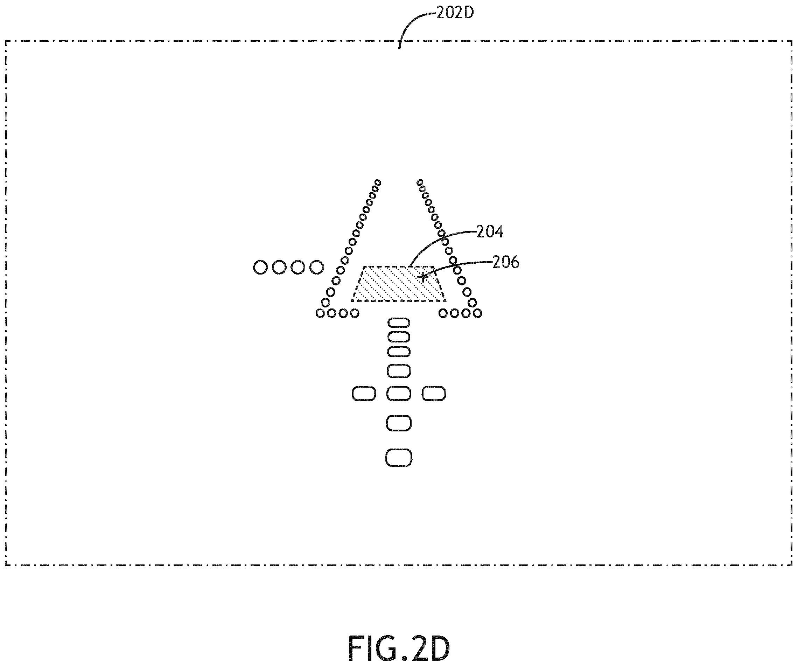

Referring now to FIGS. 2A, 2B, 2C, and 2D, exemplary embodiments of exemplary display image images 202A, 202B, 202C, 202D are shown. In some embodiments, at least one processor may be configured to: generate at least one display image based at least on image sensor data, a runway, a touch down zone, and/or an FPV and/or an FPP. For example, each of the at least one display image 202A, 202B, 202C, 202D may include a given image of at least one image of the view from the aircraft, the runway 103, a touch down zone indicator 204 associated with the touch down zone, and/or an FPV and/or FPP indicator 206 associated with the FPP. For example, the FPV and/or FPP indicator 206 may include graphical elements that graphical convey information about lateral offset errors and a center of the FPV and/or FPP indicator 206, wherein such graphical elements may be present in the exemplary cross-shaped FPV and/or FPP indicator 206. 202FIG. 2A shows the display image 202A corresponding to a day-time approach. FIG. 2B shows the display image 202B corresponding to a night-time approach. FIG. 2C shows the display image 202C corresponding to a day-time approach. FIG. 2D shows the display image 202D corresponding to a night-time approach.

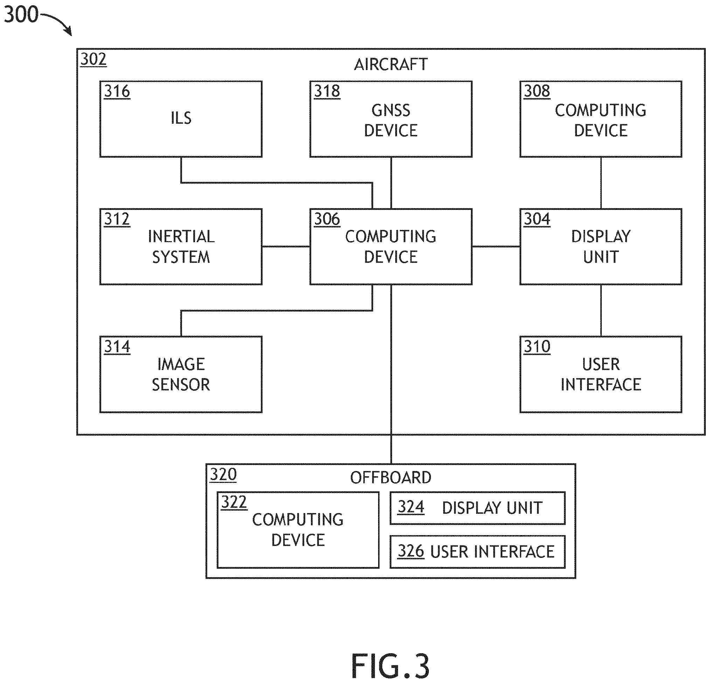

Referring now to FIGS. 3-5, an exemplary embodiment of a system 300 according to the inventive concepts disclosed herein is depicted. In some embodiments, the system may include an aircraft 302 and/or at least one offboard platform 320, some or all of which may be communicatively coupled at any given time.

In some embodiments, the aircraft 302 may include at least one onboard pilot and may be a single-piloted or multiple-piloted aircraft; in some embodiments, the aircraft 302 may be an uncrewed aerial system (UAS) (e.g., a remote-piloted UAS and/or an autonomous UAS). In some embodiments, the aircraft 302 may include at least one user (e.g., flight crew and/or pilot(s)), at least one display unit computing device 304, at least one computing device 306, at least one aircraft computing device 308, at least one user interface 310, at least one inertial system 312, at least one AHARS, at least one MEMS device, at least one image sensor 314, at least one instrument landing system (ILS) 316, and/or at least one GNSS device 318, some or all of which may be communicatively coupled at any given time.

In some embodiments, the at least one display unit computing device 304, the at least one computing device 306, the at least one aircraft computing device 308, the at least one user interface 310, the at least one inertial system 312, the at least one image sensor 314, the at least one instrument landing system (ILS) 316, the at least one GNSS device 318, the at least one computing device 322, the at least one display unit computing device 324, and/or the at least one user interface 326 may be implemented as a single computing device or any number of computing devices configured to perform (e.g., collectively perform if more than one computing device) any or all of the operations disclosed throughout. For example, in some embodiments, the at least one display unit computing device 304, the at least one computing device 306, the at least one aircraft computing device 308, the at least one user interface 310, the at least one computing device 322, the at least one display unit computing device 324, and/or the at least one user interface 326 may be installed in the aircraft 302, the offboard platform 320, or some combination thereof.

In some embodiments, the user may be a pilot or crew member, who may be located onboard the aircraft 302 or at the offboard platform 320. For example, the user may interface with the system 300 via the at least one user interface 310. The at least one user interface 310 may be implemented as any suitable user interface, such as a touchscreen (e.g., of the display unit computing device 304 and/or another display unit), a multipurpose control panel, a control panel integrated into a flight deck, a cursor control panel (CCP) (sometimes referred to as a display control panel (DCP)), a keyboard, a mouse, a trackpad, at least one hardware button, a switch, an eye tracking system, and/or a voice recognition system. The user interface 310 may be configured to receive at least one user input and to output the at least one user input to a computing device (e.g., 304, 306, 308, 322, 324, and/or 326). For example, a pilot of the aircraft 302 may be able to interface with the user interface 310 to: engage (or disengage) a mode to cause the display image 200A, 200B, 200C, and/or 200D to be displayed. For example, such user inputs may be output to a computing device (e.g., 304, 306, 308, 322, 324, and/or 326).

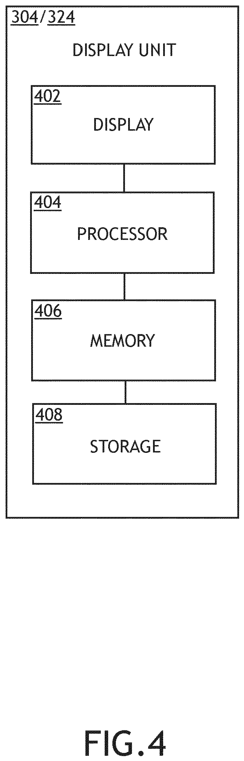

The display unit computing device 304 may be implemented as any suitable computing device, such as a primary flight display (PFD) computing device and/or a multi-function window (MFW) display computing device. As shown in FIG. 4, the display unit computing device 304 may include at least one display 402, at least one processor 404, at least one memory 406, and/or at least one storage 410, some or all of which may be communicatively coupled at any given time. For example, the at least one processor 404 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 404 may include a CPU and a GPU configured to perform (e.g., collectively perform) any of the operations disclosed throughout. The processor 404 may be configured to run various software applications or computer code stored (e.g., maintained) in a non-transitory computer-readable medium (e.g., memory 406 and/or storage 410) and configured to execute various instructions or operations. The processor 404 may be configured to perform any or all of the operations disclosed throughout. For example, the at least one processor 404 may be configured to: obtain data of an aircraft 302, the aircraft 302 performing an approach procedure, the data including and/or associated with flight path information, the flight path information including at least one of a flight path vector (FPV) or a flight path predictor (FPP); obtain image sensor data output by at least one image sensor 314 of the aircraft 302, the image sensor data including data associated with at least one image 102A, 102B of a view from the aircraft 302, the view at least partially in front of the aircraft 302; identify features associated with a runway 103, the features within one or more of the at least one image 102A, 102B; determine that the identified features are indicative of the runway 103; determine a touch down zone 202 on the runway 103, wherein the touch down zone 202 is defined by toleranced boundary locations representing an acceptable touch down dispersion for the aircraft 302; compare the FPV and/or the FPP with the touch down zone 202 to determine whether the FPV and/or the FPP is in the touch down zone 202 when the aircraft 302 is at a decision altitude and/or is predicted to be in the touch down zone 202 when the aircraft 302 will be at the decision altitude; and/or at least one of: (a) at least one of: (i) upon a determination that the FPV and/or the FPP is in and/or is predicted to be in the touch down zone 202 at the decision altitude, output a notification for presentation to a user to proceed with a landing procedure, or (ii) upon the determination that the FPV and/or the FPP is in and/or is predicted to be in the touch down zone 202 at the decision altitude, perform an operation configured to cause the aircraft 302 to proceed with the landing procedure; or (b) at least one of: (i) upon a determination that the FPV and/or the FPP is not in and/or is not predicted to be in the touch down zone 202 at the decision altitude, output a notification for presentation to the user to perform a go-around procedure, or (ii) upon the determination that the FPV and/or the FPP is not in and/or is not predicted to be in the touch down zone 202 at the decision altitude, perform an operation configured to cause the aircraft 302 to perform the go-around procedure. In some embodiments, the at least one processor 404 may be configured to and/or further configured to: generate at least one display image 202A, 202B, 202C, and/or 202D based at least on the image sensor data, the runway 103, the touch down zone, and the FPV and/or the FPP; and/or output the at least one display image 202A, 202B, 202C, and/or 202D to the at least one display 402 for presentation to the user, each of the at least one display image 202A, 202B, 202C, and/or 202D including a given image of the at least one image 102A, 102B, 102C, and/or 102D of the view from the aircraft 302, the runway 103, a touch down zone indicator 204 associated with the touch down zone, and an FPV and/or FPP indicator 206 associated with the FPV and/or the FPP. The at least one display 402 may be configured to: display the at least one display image 202A, 202B, 202C, and/or 202D to the user.

In some embodiments, the data may include and/or may be associated with flight path information, which may be output to the at least one processor 404, 502 by the inertial system 312, the AHARS, a MEMS device, or the like.

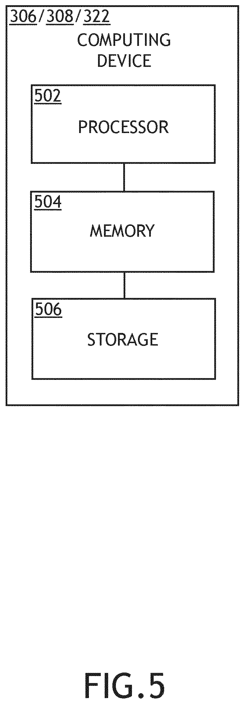

The at least one computing device 306 may be implemented as any suitable computing device. The at least one computing device 306 may include any or all of the elements shown in FIG. 5. For example, the computing device 306 may at least one processor 502, at least one memory 504, and/or at least one storage 506, some or all of which may be communicatively coupled at any given time. For example, the at least one processor 502 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 502 may include a CPU and a GPU configured to perform (e.g., collectively perform) any of the operations disclosed throughout. The processor 502 may be configured to run various software applications (e.g., an ADS-B application and/or a radar application) or computer code stored (e.g., maintained) in a non-transitory computer-readable medium (e.g., memory 504 and/or storage 506) and configured to execute various instructions or operations. The processor 502 of the computing device 306 may be configured to perform any or all of the operations disclosed throughout. In some embodiments, the at least one processor 502 may be configured to recognize, identify, and/or classify objects or features (e.g., runway edges 104, runway threshold 108, and/or runway and approach lights (e.g., 110 and/or 112)) in an image or video using image processing techniques, such as various approaches for feature extraction and/or pattern recognition. In some embodiments, the at least one processor 502 may be configured to project the aircraft's flight path relative to the aircraft orientation. In some embodiments, the at least one processor 502 may be configured to perform a comparison of the projected flight path to a touch down zone determined based on recognized images. In some embodiments, the at least one processor 502 may be configured to output at least one notification (e.g., at least one alert) based on any various of conditions, such as the flight path is not projected to be within the identified touch down zone for an extended period of time, the flight path projection is within the identified touchdown zone but is not stable in lateral or vertical axis for an extended period of time, and/or the touch down zone is not identified in the image. For example, the at least one processor 502 may be configured to: obtain data of an aircraft 302, the aircraft 302 performing an approach procedure, the data including and/or associated with flight path information, the flight path information including at least one of a flight path vector (FPV) or a flight path predictor (FPP); obtain image sensor data output by at least one image sensor 314 of the aircraft 302, the image sensor data including data associated with at least one image 102A, 102B of a view from the aircraft 302, the view at least partially in front of the aircraft 302; identify features associated with a runway 103, the features within one or more of the at least one image 102A, 102B; determine that the identified features are indicative of the runway 103; determine a touch down zone 202 on the runway 103, wherein the touch down zone 202 is defined by toleranced boundary locations representing an acceptable touch down dispersion for the aircraft 302; compare the FPV and/or the FPP with the touch down zone 202 to determine whether the FPV and/or the FPP is in the touch down zone 202 when the aircraft 302 is at a decision altitude and/or is predicted to be in the touch down zone 202 when the aircraft 302 will be at the decision altitude; and/or at least one of: (a) at least one of: (i) upon a determination that the FPV and/or the FPP is in and/or is predicted to be in the touch down zone 202 at the decision altitude, output a notification for presentation to a user to proceed with a landing procedure, or (ii) upon the determination that the FPV and/or the FPP is in and/or is predicted to be in the touch down zone 202 at the decision altitude, perform an operation configured to cause the aircraft 302 to proceed with the landing procedure; or (b) at least one of: (i) upon a determination that the FPV and/or the FPP is not in and/or is not predicted to be in the touch down zone 202 at the decision altitude, output a notification for presentation to the user to perform a go-around procedure, or (ii) upon the determination that the FPV and/or the FPP is not in and/or is not predicted to be in the touch down zone 202 at the decision altitude, perform an operation configured to cause the aircraft 302 to perform the go-around procedure.

The at least one computing device 308 may be implemented as any suitable computing device. The at least one computing device 308 may include any or all of the elements shown in FIG. 5. For example, the computing device 308 may at least one processor 502, at least one memory 504, and/or at least one storage 506, some or all of which may be communicatively coupled at any given time. For example, the at least one processor 502 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 502 may include a CPU and a GPU configured to perform (e.g., collectively perform) any of the operations disclosed throughout. The processor 502 may be configured to run various software applications (e.g., an ADS-B application and/or a radar application) or computer code stored (e.g., maintained) in a non-transitory computer-readable medium (e.g., memory 504 and/or storage 506) and configured to execute various instructions or operations. The at least one processor 502 of the computing device 308 may be configured to perform any or all of the operations disclosed throughout.

The at least one inertial system 312 may be any suitable inertial system or combination of inertial systems, such as at least one inertial reference unit (IRU) and/or at least one inertial measurement system (IMS). In some embodiments, the at least one inertial system 312 may include at least one sensor (e.g., at least one gyroscope and/or at least one accelerometer) and electronics such that the at least one inertial system 312 may be configured to provide the data (e.g., including and/or associated with flight path information, the flight path information including at least one of a flight path vector (FPV) or a flight path predictor (FPP)), which may include information associated with attitude, velocity, and/or acceleration of the aircraft 302.

The at least one image sensor 314 may be any suitable image sensor or combination of image sensor, such as at least one forward-looking image sensor. For example, the at least one image sensor 314 may be at least one electromagnetic (EM) image sensor, such as at least one radar system and/or at least one camera installed on the aircraft 302. For example, the at least one image sensor 314 may be configured to sense electromagnetic energy (e.g., light and/or radio waves) and output corresponding image data associated with images. In some embodiments, the at least one image sensor 314 may be able to receive incoming light and/or radio frequency signals into an electrical signal that can be viewed and analyzed. Some image sensors 314 may be configured to emit a signal and listen for reflections, and other image sensors may rely on the signals emitted or reflected from objects in the field of view.

In some embodiments, the at least one offboard platform 320 may be any suitable offboard site (e.g., a ground site, such as an air traffic control tower) and/or offboard mobile platform (e.g., another vehicle). In some embodiments, the offboard platform 320 may include at least one user (e.g., flight crew and/or pilot(s)), at least one computing device 322, at least one display unit computing device 324, and/or at least one user interface 326, some or all of which may be communicatively coupled at any given time. In some embodiments, the at least one computing device 322 may be configured similarly and function similarly to the at least one computing device 306 of the aircraft 302, except that the at least one computing device 322 is located offboard of the aircraft 302. In some embodiments, the at least one display unit computing device 324 may be configured similarly and function similarly to the at least one display unit computing device 304 of the aircraft 302, except that the at least one display unit computing device 324 is located offboard of the aircraft 302. In some embodiments, the at least one user interface 326 may be configured similarly and function similarly to the at least one user interface 310 of the aircraft 302, except that the at least one user interface 326 is located offboard of the aircraft 302.

For example, at least one processor (e.g., the at least one processor 404 (e.g., of the at least one display unit computing device 304 and/or 324) and/or the at least one processor 502 (e.g., of the at least one computing device 306, 308, and/or 322)) may be configured to (e.g., collectively configured to, if more than one processor): obtain data of an aircraft 302, the aircraft 302 performing an approach procedure, the data including and/or associated with flight path information, the flight path information including at least one of a flight path vector (FPV) or a flight path predictor (FPP); obtain image sensor data output by at least one image sensor 314 of the aircraft 302, the image sensor data including data associated with at least one image 102A, 102B of a view from the aircraft 302, the view at least partially in front of the aircraft 302; identify features associated with a runway 103, the features within one or more of the at least one image 102A, 102B; determine that the identified features are indicative of the runway 103; determine a touch down zone 202 on the runway 103, wherein the touch down zone 202 is defined by toleranced boundary locations representing an acceptable touch down dispersion for the aircraft 302; compare the FPP with the touch down zone 202 to determine whether the FPV and/or the FPP is in the touch down zone 202 when the aircraft 302 is at a decision altitude and/or is predicted to be in the touch down zone 202 when the aircraft 302 will be at the decision altitude; and/or at least one of: (a) at least one of: (i) upon a determination that the FPV and/or the FPP is in and/or is predicted to be in the touch down zone 202 at the decision altitude, output a notification for presentation to a user to proceed with a landing procedure, or (ii) upon the determination that the FPV and/or the FPP is in and/or is predicted to be in the touch down zone 202 at the decision altitude, perform an operation configured to cause the aircraft 302 to proceed with the landing procedure; or (b) at least one of: (i) upon a determination that the FPV and/or the FPP is not in and/or is not predicted to be in the touch down zone 202 at the decision altitude, output a notification for presentation to the user to perform a go-around procedure, or (ii) upon the determination that the FPV and/or the FPP is not in and/or is not predicted to be in the touch down zone 202 at the decision altitude, perform an operation configured to cause the aircraft 302 to perform the go-around procedure.

In some embodiments, the features associated with the runway 103 may include at least one of: at least one runway edge 104, at least one runway surface marking (e.g., at least one runway threshold 108, at least one runway centerline 106, runway designation, at least one runway touchdown zone, at least one runway aiming point, and/or at least one runway side stripe) or at least one runway and approach light (e.g., 110 and/or 112; runway lights, centerline lights, threshold lights, and/or approach lights). The runway threshold is the beginning of the runway surface that is available for landing; the runway threshold does not need to correspond to the beginning of the paved surface; there are standardized markings to indicate the runway threshold. For example, the aircraft 302 may be performing the approach procedure during day-time, and the features associated with the runway 103 may include at least one of: at least one runway edge 104, at least one runway threshold 108, or at least one runway centerline 106. For example, the aircraft 302 may be performing the approach procedure at night, and the features associated with the runway 103 include at least one runway and approach light (e.g., 110 and/or 112).

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): compare the FPV and/or the FPP with the touch down zone 202 to determine whether a center of the FPV and/or the FPP is in the touch down zone 202 when the aircraft 302 is at a decision altitude and/or is predicted to be in the touch down zone 202 when the aircraft 302 will be at the decision altitude; and/or at least one of: (a) at least one of: (i) upon a determination that the center of the FPV and/or the FPP is in and/or is predicted to be in the touch down zone 202 at the decision altitude, output a notification for presentation to a user to proceed with a landing procedure, or (ii) upon the determination that the center of the FPV and/or the FPP is in and/or is predicted to be in the touch down zone 202 at the decision altitude, perform an operation configured to cause the aircraft 302 to proceed with the landing procedure; or (b) at least one of: (i) upon a determination that the center of the FPV and/or the FPP is not in and/or is not predicted to be in the touch down zone 202 at the decision altitude, output a notification for presentation to the user to perform a go-around procedure, or (ii) upon the determination that the center of the FPV and/or the FPP is not in and/or is not predicted to be in the touch down zone 202 at the decision altitude, perform an operation configured to cause the aircraft 302 to perform the go-around procedure.

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): upon the determination that the FPV and/or the FPP is in and/or is predicted to be in the touch down zone at the decision altitude, output the notification for presentation to the user to proceed with the landing procedure.

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): upon the determination that the FPV and/or the FPP is in and/or is predicted to be in the touch down zone at the decision altitude, perform the operation configured to cause the aircraft to proceed with the landing procedure.

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): upon the determination that the FPV and/or the FPP is not in and/or is not predicted to be in the touch down zone at the decision altitude, output the notification for presentation to the user to perform the go-around procedure.

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): upon the determination that the FPV and/or the FPP is not in and/or is not predicted to be in the touch down zone at the decision altitude, perform the operation configured to cause the aircraft to perform the go-around procedure.

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): generate at least one display image based at least on the image sensor data, the runway, the touch down zone, and the FPV and/or the FPP; and/or output the at least one display image to the at least one display for presentation to the user, each of the at least one display image including a given image of the at least one image of the view from the aircraft, the runway, a touch down zone indicator associated with the touch down zone, and an FPV and/or FPP indicator associated with the FPV and/or the FPP. For example, the at least one display 402 may be configured to: display the at least one display image to the user. In some embodiments, the system 300 may include the aircraft 302, and the aircraft 302 may include: the at least one processor, the at least one inertial system, the at least one image sensor, and/or the at least one display; the user may be the pilot; and the at least one processor may be configured to: upon the determination that the FPV and/or the FPP is in and/or is predicted to be in the touch down zone at the decision altitude, output the notification to the pilot to proceed with the landing procedure, or (b) upon the determination that the FPV and/or the FPP is not in and/or is not predicted to be in the touch down zone at the decision altitude, output the notification for presentation to the user to perform the go-around procedure.

In some embodiments, the aircraft 302 includes at least one global navigation satellite system (GNSS) device 318, and the at least one GNSS device 318 may be compromised (e.g., jammed) and/or determined to be inaccurate (e.g., due to spoofing) during the performance of the approach procedure.

In some embodiments, the aircraft 302 includes at least one of at least one instrument landing system (ILS) 316 or at least one global navigation satellite system (GNSS) device 318, and the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor), independent of landing guidance provided by the at least one of the at least one ILS 316 or the at least one GNSS device 318, at least one of: (a) at least one of: (i) upon the determination that the FPV and/or the FPP is in and/or is predicted to be in the touch down zone at the decision altitude, output the notification for presentation to the user to proceed with the landing procedure, or (ii) upon the determination that the FPV and/or the FPP is in and/or is predicted to be in the touch down zone at the decision altitude, perform the operation configured to cause the aircraft to proceed with the landing procedure; or (b) at least one of: (i) upon the determination that the FPV and/or the FPP is not in and/or is not predicted to be in the touch down zone at the decision altitude, output the notification for presentation to the user to perform the go-around procedure, or (ii) upon the determination that the FPV and/or the FPP is not in and/or is not predicted to be in the touch down zone at the decision altitude, perform the operation configured to cause the aircraft to perform the go-around procedure.

In some embodiments, the aircraft 302 lacks a Category IIIB landing system.

In some embodiments, the at least one processor (e.g., the at least one processor 404 (e.g., of the at least one display unit computing device 304 and/or 324) and/or the at least one processor 502 (e.g., of the at least one computing device 306, 308, and/or 322)) may be further configured to (e.g., collectively configured to, if more than one processor): monitor the FPV and/or the FPP relative to the touch down zone over a trailing time duration during the approach procedure to obtain a metric of stability; determine whether the metric of stability is acceptable as compared to a predetermined stability metric threshold; and/or at least one of: (a) at least one of: (i) upon a determination that the FPV and/or the FPP is in and/or is predicted to be in the touch down zone at the decision altitude and upon a determination that the metric of stability is acceptable, output a notification for presentation to a user to proceed with a landing procedure, or (ii) upon the determination that the FPV and/or the FPP is in and/or is predicted to be in the touch down zone at the decision altitude and upon the determination that the metric of stability is acceptable, perform an operation configured to cause the aircraft to proceed with the landing procedure; or (b) at least one of: (i) upon a determination that the FPV and/or the FPP is not in and/or is not predicted to be in the touch down zone at the decision altitude or upon a determination that the metric of stability is unacceptable, output a notification for presentation to the user to perform a go-around procedure, or (ii) upon the determination that the FPV and/or the FPP is not in and/or is not predicted to be in the touch down zone at the decision altitude or upon the determination that the metric of stability is unacceptable, perform an operation configured to cause the aircraft to perform the go-around procedure.

The at least one processor (e.g., the at least one processor 404 (e.g., of the at least one display unit computing device 304 and/or 324) and/or the at least one processor 502 (e.g., of the at least one computing device 306, 308, and/or 322)) may be configured to (e.g., collectively configured to, if more than one processor) perform any or all of the operations disclosed throughout.

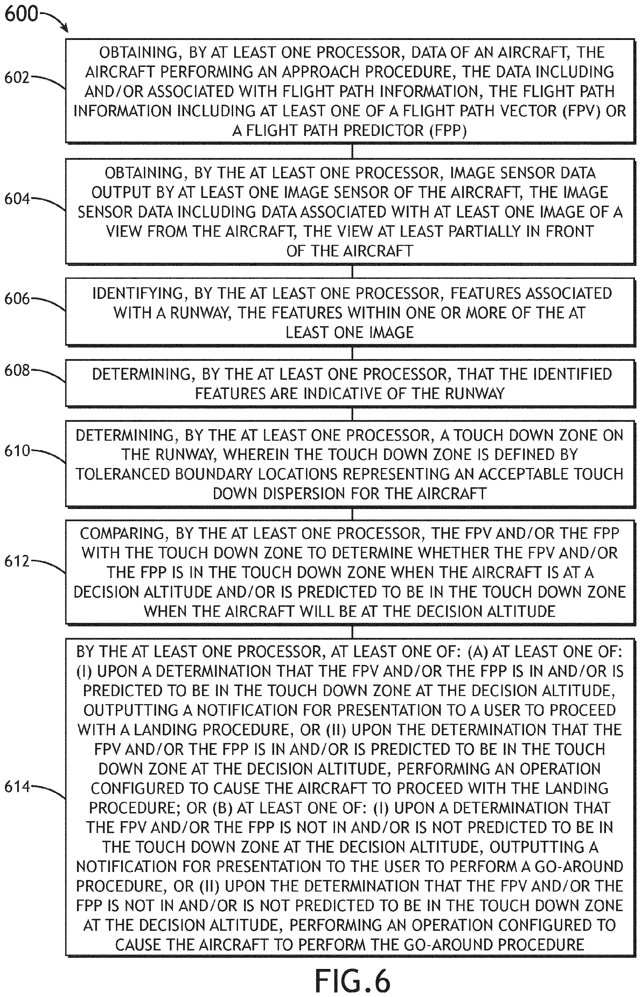

Referring now to FIG. 6, an exemplary embodiment of a method 600 according to the inventive concepts disclosed herein may include one or more of the following steps. Additionally, for example, some embodiments may include performing one or more instances of the method 600 iteratively, concurrently, and/or sequentially. Additionally, for example, at least some of the steps of the method 600 may be performed in parallel and/or concurrently. Additionally, in some embodiments, at least some of the steps of the method 600 may be performed non-sequentially.

A step 602 may include obtaining, by at least one processor, data of an aircraft, the aircraft performing an approach procedure, the data including and/or associated with flight path information, the flight path information including at least one of a flight path vector (FPV) or a flight path predictor (FPP).

A step 604 may include obtaining, by the at least one processor, image sensor data output by at least one image sensor of the aircraft, the image sensor data including data associated with at least one image of a view from the aircraft, the view at least partially in front of the aircraft.

A step 606 may include identifying, by the at least one processor, features associated with a runway, the features within one or more of the at least one image.

A step 608 may include determining, by the at least one processor, that the identified features are indicative of the runway.

A step 610 may include determining, by the at least one processor, a touch down zone on the runway, wherein the touch down zone is defined by toleranced boundary locations representing an acceptable touch down dispersion for the aircraft.

A step 612 may include comparing, by the at least one processor, the FPV and/or the FPP with the touch down zone to determine whether the FPV and/or the FPP is in the touch down zone when the aircraft is at a decision altitude and/or is predicted to be in the touch down zone when the aircraft will be at the decision altitude.

A step 614 may include by the at least one processor, at least one of: (a) at least one of: (i) upon a determination that the FPV and/or the FPP is in and/or is predicted to be in the touch down zone at the decision altitude, outputting a notification for presentation to a user to proceed with a landing procedure, or (ii) upon the determination that the FPV and/or the FPP is in and/or is predicted to be in the touch down zone at the decision altitude, performing an operation configured to cause the aircraft to proceed with the landing procedure; or (b) at least one of: (i) upon a determination that the FPV and/or the FPP is not in and/or is not predicted to be in the touch down zone at the decision altitude, outputting a notification for presentation to the user to perform a go-around procedure, or (ii) upon the determination that the FPV and/or the FPP is not in and/or is not predicted to be in the touch down zone at the decision altitude, performing an operation configured to cause the aircraft to perform the go-around procedure.

Further, the method 600 may include any of the operations disclosed throughout.

As will be appreciated from the above, embodiments of the inventive concepts disclosed herein may be directed to a system (e.g., an aircraft system or a system including an aircraft and an offboard device) and a method configured to compare an aircraft's flight path predictor (FPP) with a touch down zone to determine whether the FPP is in the touch down zone when the aircraft is at a decision altitude and/or is predicted to be in the touch down zone when the aircraft will be at the decision altitude, make a go/no go decision and/or recommendation, and/or at least one of output a notification to user or perform and aircraft operation based on the go/no go decision and/or recommendation.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ... , one hundred, or more. Similarly, as used throughout, "one or more" means one or a plurality of; for example, "one or more" may comprise one, two, three, ... , one hundred, or more. Further, as used throughout, "zero or more" means zero, one, or a plurality of; for example, "zero or more" may comprise zero, one, two, three, ... , one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that changes may be made within the scope of the invention as defined by the claims.

## Claims

1. A system, comprising:
at least one processor (404), the at least one processor configured to:
obtain data of an aircraft (302), the aircraft performing an approach procedure, the data including and/or associated with flight path information, the flight path information including at least one of a flight path vector, FPV, or a flight path predictor, FPP;
obtain image sensor data output by at least one image sensor (314) of the aircraft, the image sensor data including data associated with at least one image of a view from the aircraft, the view at least partially in front of the aircraft;
identify features associated with a runway (103), the features within one or more of the at least one image;
determine that the identified features are indicative of the runway;
determine a touch down zone (202) on the runway, wherein the touch down zone is defined by toleranced boundary locations representing an acceptable touch down dispersion for the aircraft;
compare the FPV and/or the FPP with the touch down zone to determine whether the FPV and/or the FPP is in the touch down zone when the aircraft is at a decision altitude and/or is predicted to be in the touch down zone when the aircraft will be at the decision altitude; and
at least one of: (a) at least one of: (i) upon a determination that the FPV and/or the FPP is in and/or is predicted to be in the touch down zone at the decision altitude, output a notification for presentation to a user to proceed with a landing procedure, or (ii) upon the determination that the FPV and/or the FPP is in and/or is predicted to be in the touch down zone at the decision altitude, perform an operation configured to cause the aircraft to proceed with the landing procedure; or (b) at least one of: (i) upon a determination that the FPV and/or the FPP is not in and/or is not predicted to be in the touch down zone at the decision altitude, output a notification for presentation to the user to perform a go-around procedure, or (ii) upon the determination that the FPV and/or the FPP is not in and/or is not predicted to be in the touch down zone at the decision altitude, perform an operation configured to cause the aircraft to perform the go-around procedure.

2. The system of claim 1, wherein the flight path information includes the FPV and/or wherein the flight path information includes the FPP.

3. The system of claim 1 or 2, wherein the features associated with the runway include at least one of: at least one runway edge (104), at least one runway marking, or at least one runway and approach light (110).

4. The system of any preceding claim, wherein the at least one processor (404) is further configured to:
compare the FPV and/or the FPP with the touch down zone to determine whether a center of the FPV and/or the FPP is in the touch down zone when the aircraft is at a decision altitude and/or is predicted to be in the touch down zone when the aircraft will be at the decision altitude; and
at least one of: (a) at least one of: (i) upon a determination that the center of the FPV and/or the FPP is in and/or is predicted to be in the touch down zone at the decision altitude, output a notification for presentation to a user to proceed with a landing procedure, or (ii) upon the determination that the center of the FPV and/or the FPP is in and/or is predicted to be in the touch down zone at the decision altitude, perform an operation configured to cause the aircraft to proceed with the landing procedure; or (b) at least one of: (i) upon a determination that the center of the FPV and/or the FPP is not in and/or is not predicted to be in the touch down zone at the decision altitude, output a notification for presentation to the user to perform a go-around procedure, or (ii) upon the determination that the center of the FPV and/or the FPP is not in and/or is not predicted to be in the touch down zone at the decision altitude, perform an operation configured to cause the aircraft to perform the go-around procedure.

5. The system of claim 1, wherein the at least one processor (404) is configured to: upon the determination that the FPV and/or the FPP is in and/or is predicted to be in the touch down zone at the decision altitude, output the notification for presentation to the user to proceed with the landing procedure, or perform the operation configured to cause the aircraft to proceed with the landing procedure.

6. The system of any preceding claim, wherein the at least one processor (404) is configured to: upon the determination that the FPV and/or the FPP is not in and/or is not predicted to be in the touch down zone at the decision altitude, output the notification for presentation to the user to perform the go-around procedure, or perform the operation configured to cause the aircraft to perform the go-around procedure.

7. The system of any preceding claim, further comprising at least one display, wherein the at least one processor is further configured to: generate at least one display image based at least on the image sensor data, the runway, the touch down zone, and the FPV and/or the FPP; and output the at least one display image to the at least one display for presentation to the user, each of the at least one display image including a given image of the at least one image of the view from the aircraft, the runway, a touch down zone indicator associated with the touch down zone, and an FPV and/or FPP indicator associated with the FPV and/or the FPP;
wherein the at least one display is configured to: display the at least one display image to the user.

8. The system of claim 7, further comprising the aircraft (302), the aircraft comprising: the at least one processor (404), at least one inertial system (312), the at least one image sensor (314), and the at least one display; wherein the user is the pilot; wherein the at least one processor is configured to: upon the determination that the FPV and/or the FPP is in and/or is predicted to be in the touch down zone at the decision altitude, output the notification to the pilot to proceed with the landing procedure, or (b) upon the determination that the FPV and/or the FPP is not in and/or is not predicted to be in the touch down zone at the decision altitude, output the notification for presentation to the user to perform the go-around procedure.

9. The system of any preceding claim, wherein the aircraft is an uncrewed aerial system, UAS, or wherein the aircraft is a remote-piloted aircraft.

10. The system of any preceding claim, wherein the at least one image sensor is at least one electromagnetic, EM, image sensor.

11. The system of any preceding claim, wherein the aircraft includes at least one global navigation satellite system, GNSS, device, wherein the at least one GNSS device is compromised or determined to be inaccurate during the performance of the approach procedure.

12. The system of any preceding claim, wherein the aircraft includes at least one of at least one instrument landing system, ILS, or at least one global navigation satellite system, GNSS, device, wherein the at least one processor is configured to, independent of landing guidance provided by the at least one of the at least one ILS or the at least one GNSS device, at least one of: (a) at least one of: (i) upon the determination that the FPV and/or the FPP is in and/or is predicted to be in the touch down zone at the decision altitude, output the notification for presentation to the user to proceed with the landing procedure, or (ii) upon the determination that the FPV and/or the FPP is in and/or is predicted to be in the touch down zone at the decision altitude, perform the operation configured to cause the aircraft to proceed with the landing procedure; or (b) at least one of: (i) upon the determination that the FPV and/or the FPP is not in and/or is not predicted to be in the touch down zone at the decision altitude, output the notification for presentation to the user to perform the go-around procedure, or (ii) upon the determination that the FPV and/or the FPP is not in and/or is not predicted to be in the touch down zone at the decision altitude, perform the operation configured to cause the aircraft to perform the go-around procedure.

13. The system of any preceding claim, wherein the aircraft lacks a Category IIIB landing system.

14. The system of any preceding claim, wherein the at least one processor is further configured to:
monitor the FPV and/or the FPP relative to the touch down zone over a trailing time duration during the approach procedure to obtain a metric of stability;
determine whether the metric of stability is acceptable as compared to a predetermined stability metric threshold; and
at least one of: (a) at least one of: (i) upon a determination that the FPV and/or the FPP is in and/or is predicted to be in the touch down zone at the decision altitude and upon a determination that the metric of stability is acceptable, output a notification for presentation to a user to proceed with a landing procedure, or (ii) upon the determination that the FPV and/or the FPP is in and/or is predicted to be in the touch down zone at the decision altitude and upon the determination that the metric of stability is acceptable, perform an operation configured to cause the aircraft to proceed with the landing procedure; or (b) at least one of: (i) upon a determination that the FPV and/or the FPP is not in and/or is not predicted to be in the touch down zone at the decision altitude or upon a determination that the metric of stability is unacceptable, output a notification for presentation to the user to perform a go-around procedure, or (ii) upon the determination that the FPV and/or the FPP is not in and/or is not predicted to be in the touch down zone at the decision altitude or upon the determination that the metric of stability is unacceptable, perform an operation configured to cause the aircraft to perform the go-around procedure.

15. A method, comprising:
obtaining, by at least one processor (404), data of an aircraft (302), the aircraft performing an approach procedure, the data including and/or associated with flight path information, the flight path information including at least one of a flight path vector, FPV, or a flight path predictor, FPP;
obtaining, by the at least one processor, image sensor data output by at least one image sensor (314) of the aircraft, the image sensor data including data associated with at least one image of a view from the aircraft, the view at least partially in front of the aircraft;
identifying, by the at least one processor, features associated with a runway (103), the features within one or more of the at least one image;
determining, by the at least one processor, that the identified features are indicative of the runway;
determining, by the at least one processor, a touch down zone (202) on the runway, wherein the touch down zone is defined by toleranced boundary locations representing an acceptable touch down dispersion for the aircraft;
comparing, by the at least one processor, the FPV and/or the FPP with the touch down zone to determine whether the FPV and/or the FPP is in the touch down zone when the aircraft is at a decision altitude and/or is predicted to be in the touch down zone when the aircraft will be at the decision altitude; and
by the at least one processor, at least one of: (a) at least one of: (i) upon a determination that the FPV and/or the FPP is in and/or is predicted to be in the touch down zone at the decision altitude, outputting a notification for presentation to a user to proceed with a landing procedure, or (ii) upon the determination that the FPV and/or the FPP is in and/or is predicted to be in the touch down zone at the decision altitude, performing an operation configured to cause the aircraft to proceed with the landing procedure; or (b) at least one of: (i) upon a determination that the FPV and/or the FPP is not in and/or is not predicted to be in the touch down zone at the decision altitude, outputting a notification for presentation to the user to perform a go-around procedure, or (ii) upon the determination that the FPV and/or the FPP is not in and/or is not predicted to be in the touch down zone at the decision altitude, performing an operation configured to cause the aircraft to perform the go-around procedure.
